**Europäisches Patentamt**

**European Patent Office**

**Office européen des brevets**

(19)

(11) Numéro de publication: **0 170 580**
**B1**

(12) # FASCICULE DE BREVET EUROPEEN

(45) Date de publication du fascicule du brevet:
**01.06.88**

(51) Int. Cl.⁴: **F 25 D 3/10,** A 23 L 3/36

(21) Numéro de dépôt: **85401388.5**

(22) Date de dépôt: **09.07.85**

(54) Procédé et appareil de refroidissement d'une charge de produits.

(30) Priorité: **12.07.84 FR 8411089**
**11.01.85 FR 8500361**

(43) Date de publication de la demande:
**05.02.86 Bulletin 86/6**

(45) Mention de la délivrance du brevet:
**01.06.88 Bulletin 88/22**

(84) Etats contractants désignés:
**AT BE CH DE FR GB IT LI LU NL SE**

(56) Documents cités:
**EP - A - 0 069 688**
**BE - A - 764 138**
**GB - A - 20 363**
**GB - A - 521 715**

(73) Titulaire: **CARBOXYQUE FRANCAISE, 91, rue du Faubourg Saint-Honoré, F-75362 Paris-Cédex 08 (FR)**

(72) Inventeur: **Gibot, Claude, 5-7, rue Gambetta, F-92240 Malakoff (FR)**

(74) Mandataire: **Jacobson, Claude et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07 (FR)**

ACTORUM AG

## Description

La présente invention est relative à un procédé et à un appareil de refroidissement d'une charge de produits, notamment alimentaires, du type décrit dans le préambule des revendications 1 et 4 respectivement. Elle s'applique en particulier à la conservation sans congélation de produits alimentaires variés crus ou cuits, notamment de produits de salaisons ou de patisserie charcutière à base de porc, volaille, poisson, légumes ou autres.

Le GB-A 521 715 décrit un procédé et un appareil du type précité. Cependant, il s'agit là de congélation rapide, au moins superficielle, de denrées alimentaires, mais l'enseignement de ce document ne permet pas d'obtenir rapidement des produits refroidis à une température légèrement supérieure à 0°C et saturés en $CO_2$.

L'invention a pour but de fournir une technique de refroidissement permettant d'obtenir rapidement et économiquement, de façon industrielle, des produits aptes à être conservés sans congélation pendant des périodes relativement longues.

A cet effet, le procédé et l'appareil suivant l'invention se distinguent du procédé et de l'appareil connus par le contenu de la partie caractérisante des revendications 1 et 4, respectivement.

Les produits traités suivant l'invention sont simultanément refroidis et saturés en $CO_2$. Lorsqu'ils sont ensuite conditionnés en barquettes sous film de matière plastique thermosoudé, sous atmosphère de $CO_2$, les pertes de $CO_2$ dues à la perméabilité des films de matière plastique sont remplacées au fur et à mesure par du $CO_2$ résultant de la désorption des produits. Ainsi, le temps de conservation des produits est considérablement allongé, et leur présentation en barquettes est bien plus satisfaisante que celle de produits conservés sous vide.

De plus, le réchauffage des gaz avant leur évacuation permet de préserver les pièces actives de l'organe de décharge taré tout en lui conservant toute sa précision de régulation.

Pour traiter simultanément plusieurs charges, identiques ou non, il est avantageux de traiter chaque charge dans une enceinte, de collecter et de réchauffer l'ensemble des gaz sortant des enceintes, et d'évacuer l'ensemble des gaz réchauffés par un conduit unique. Ceci permet à la fois de résoudre certaines difficultés technologiques et d'obtenir une grande souplesse de fonctionnement, comme cela apparaîtra plus loin.

Dans un mode de réalisation avantageux de l'appareil suivant l'invention, l'enceinte est munie d'une porte à ouverture rapide. Cette porte peut notamment être montée rotative sur un axe porté par une charnière qui assure l'articulation de la porte sur l'enceinte, l'enceinte et la porte présentant des reliefs de verrouillage du type baïonnette à effet de came.

Un exemple de mise en œuvre de l'invention va maintenant être décrit en regard des annexes, sur lesquels:

la fig. 1 est une vue en perspective, avec arrachement, d'un appareil conforme à l'invention;

la fig. 2 est une vue en coupe longitudinale d'une enceinte de refroidissement de cet appareil;

la fig. 3 est une vue partielle en perspective d'une enceinte d'une variante d'appareil de refroidissement conforme à l'invention;

la fig. 4 est une vue de face de cette enceinte, la porte étant déverrouillée; et

la fig. 5 est une vue prise en coupe suivant la ligne V–V de la fig. 4, la porte étant verrouillée.

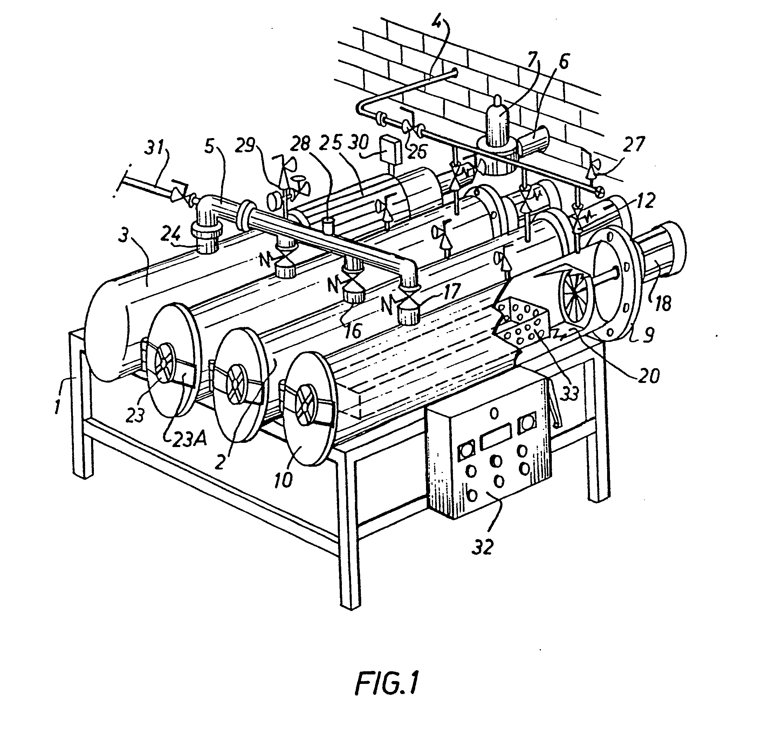

L'appareil représenté à la fig. 1 est destiné à refroidir sous pression à une température de l'ordre de +2°C, et donc sans congélation, des produits alimentaires tels que des produits de salaisons ou de patisserie charcutière à base de porc, volaille, poisson, légumes ou autres. Cet appareil, porté par un bâti 1, comprend essentiellement trois enceintes étanches 2 de refroidissement sous pression, toutes identiques, un caisson 3 de réchauffage, une conduite 4 d'amenée de $CO_2$ liquide, un collecteur de gaz 5 et un tuyau d'évacuation 6 équipé d'un organe de décharge taré ou déverseur 7.

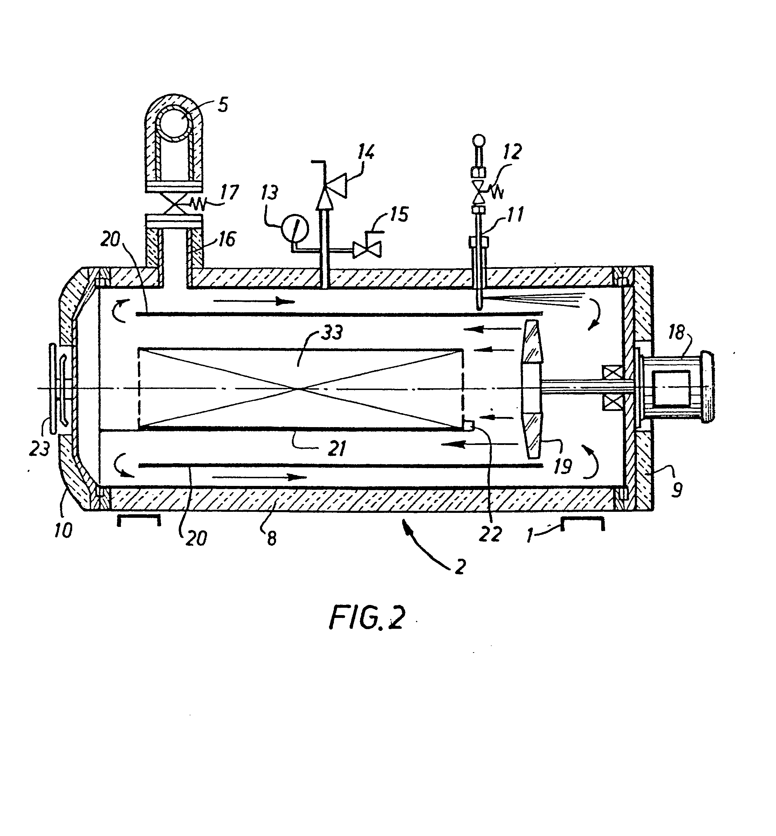

Comme on le voit bien à la fig. 2, chaque enceinte 2 comprend un fût cylindrique 8 à axe horizontal muni à une extrémité d'un fond fixe 9 démontable et à l'autre extrémité d'une porte 10.

Le fût 8 est traversé par une dérivation 11 de la conduite 4 équipée d'une électrovanne 12 et se terminant par une buse de détente. Sur ce fût 8 font saillie une prise de pression conduisant à un manomètre 13, à une soupape de sécurité 14 et à un robinet 15 de purge, et une tubulure 16 qui, par l'intermédiaire d'une électrovanne 17, est reliée au collecteur 5.

Un moteur électrique 18 est fixé extérieurement sur le fond 9; son arbre pénètre dans l'enceinte 2 et se termine par une hélice soufflante 19. Au-dessus et au-dessous de cette dernière sont prévues deux plaques déflectrices horizontales 20 qui rejoignent latéralement le fût 8 et qui s'étendent longitudinalement jusqu'à une faible distance du fond 9 et de la porte 10.

Le fût 8 est encore muni intérieurement, un peu aus-desssus de la plaque 20 inférieure, de deux glissières longitudinales 21 se terminant, près de l'hélice 19, par deux butées 22.

La porte 10, articulée d'un côté sur le fût 8, comporte une poignée 23 d'ouverture et de fermeture rapide, du type quart de tour, solidaire d'un loquet de verrouillage 23A. En variante, la porte 10 pourrait être équipée de plusieurs verrous manuels répartis sur sa périphérie.

Le caisson de réchauffage 3 a la même forme cylindrique à axe horizontal que les enceintes 2, ces quatre récipients étant montés côte à côte sur le bâti 1. Le caisson 3 comporte une tubulure d'entrée 24 reliée à la sortie du collecteur 5, un manchon chauffant 25 à résistance électriques, et un tuyau d'évacuation 6.

Ce dernier part de l'extrémité arrière, adjacente aux fonds 9, du caisson 3. Le déverseur 7 est un régulateur de pression amont du type à membrane chargée par un ressort, taré par exemple à 3 bars; un organe de ce type est capable d'effectuer une régulation précise, par exemple entre 3 et 3,2 bars, de la pression qui règne en amont, c'est-à-dire dans le caisson 3 et dans les enceintes 2.

On a encore représenté à la fig. 1 divers accessoires de l'appareil: un robinet d'arrêt 26 et une soupape de sécurité 27 sur la conduite 4; une sonde de température 28 et un ensemble 29 manomètre-soupape de sécurité-robinet de purge sur le collecteur 5; un thermostat 30 sur le caisson 3; une conduite de mise sous vide 31 reliée au collecteur 5 et équipée d'un robinet d'arrêt; et un coffret de commande électrique 32. Par ailleurs, les enceintes 2, le conduit 4 et le collecteur 5 sont convenablement calorifugés.

Le fonctionnement de l'apparail ainsi décrit est le suivant.

Les électrovannes 17 étant ouvertes, le manchon 25 est mis en marche et, sous la commande du thermostat 30, amène puis maintient la température du caisson 3 à une valeur de consigne relativement chaude, par exemple +30°C. On peut alors commencer les opérations de refroidissement.

Pour cela, on dispose les produits à traiter dans trois paniers parallélépipédiques 33, et l'on charge les enceintes 2, chaque panier étant supporté et guidé par les glissières 21 et étant poussé jusqu'aux butées 22 de l'enceinte correspondante.

Après fermeture et verrouillage des portes 10, on met en marche les moteurs 18, et l'on ouvre, éventuellement de façon intermittente, les vannes 12; du $CO_2$ liquide, provenant d'un stockage sous 20 bars, est injecté dans le enceintes 2 par les buses de détente des tubes 11, vers les fonds 9, comme représenté à la fig. 2. L'hélice 19 assure dans chaque enceinte une circulation forcée du $CO_2$ gazeux froid ainsi produit, suivant les flèches indiquées.

Les gaz froids s'échappant par le collecteur 5 se diluent dans l'atmosphère chaude du caisson 3. La puissance de chauffage du manchon 5 est suffisante pour que, pour le débit maximal de gaz froid pouvant sortir des trois enceintes 2, la température du caisson 3 reste positive, par exemple supérieure ou égale +5°C.

La pression s'élève progressivement dans l'appareil, jusqu'à atteindre la valeur de consigne de 3 bars. Le déverseur 7 s'ouvre alors, et commence à réguler sur cette valeur la pression du caisson 3, du collecteur 5 et des enceintes 2. En même temps, la température des enceintes de refroidissement est régulée par la sonde de température 28 sur une valeur prédéterminée, par exemple de −20°C, cette sonde commandant les vannes 12 d'injection de $CO_2$ liquide.

Au bout d'un temps prédéterminé de traitement, correspondant à une température des produits traités de l'ordre de +2°C par exemple, les moteurs 18 et l'injection de $CO_2$ sont arrêtés, le enceintes sont remises à la pression atmosphérique par ouverture des robinets de purge 15, les portes 10 sont ouvertes, et les paniers 33 sont extraits des enceintes et transférés à un poste de conditionnement des produits en barquettes sous $CO_2$ à pression atmosphérique et film de matière plastique thermosoudé.

On comprend que l'ensemble des opérations, à part l'introduction et l'évacuation des paniers 33, peuvent être commandés automatiquement par un programme adapté à chaque type de produit à traiter.

Si l'on traite plusieurs types de produits, les enceintes peuvent sans difficulté être commandées indépendamment les unes des autres, en isolant simplement la ou les enceintes non chargées au moyen des électrovannes 17 correspondantes. Dans ce cas, ces électrovannes 17 ne sont ouvertes de nouveau que lorsque l'équilibre des pressions est rétabli. On voit ainsi que l'appareil, de par sa conception modulaire, présente une grande souplesse d'utilisation.

Si, au contraire, on traite un seul type de produit, la structure modulaire reste avantageuse d'une part parce qu'elle permet de s'adapter aux quantités à traiter, par mise hors service temporaire d'une ou de deux enceintes, d'autre part parce qu'elle permet de réaliser économiquement des portes 10 à ouverture rapide résistant à la pression, ce qui ne serait pas possible avec une enceinte unique de grand diamètre.

Grâce au fonctionnement de l'appareil sous pression, les produits sont simultanément refroidis à la température désirée et saturés en $CO_2$. Plus précisément, la pression est choisie de manière que le temps de saturation soit sensiblement égal au temps de refroidissement. On obtient ainsi rapidement et économiquement des produits aptes à être conservés longtemps sans congélation, comme expliqué plus haut.

L'appareil peut également être utilisé pour traiter des produits alvéolés, par exemple des produits de patisserie charcutière enrobés dans une croûte de pâte cuite. Dans ce cas, on procède de la manière suivante:
– chargement des trois enceintes 2;
– mise sous vide partiel (par exemple −0,5 bars) de l'ensemble de l'appareil au moyen de la conduite 31, ce qui provoque de dégazage des produits à traiter;
– chauffage des caissons 3 et, simultanément, mise en marche des moteurs 18 et injection de $CO_2$ régulée par la sonde de température 28;
– fin de traitement comme précédemment.

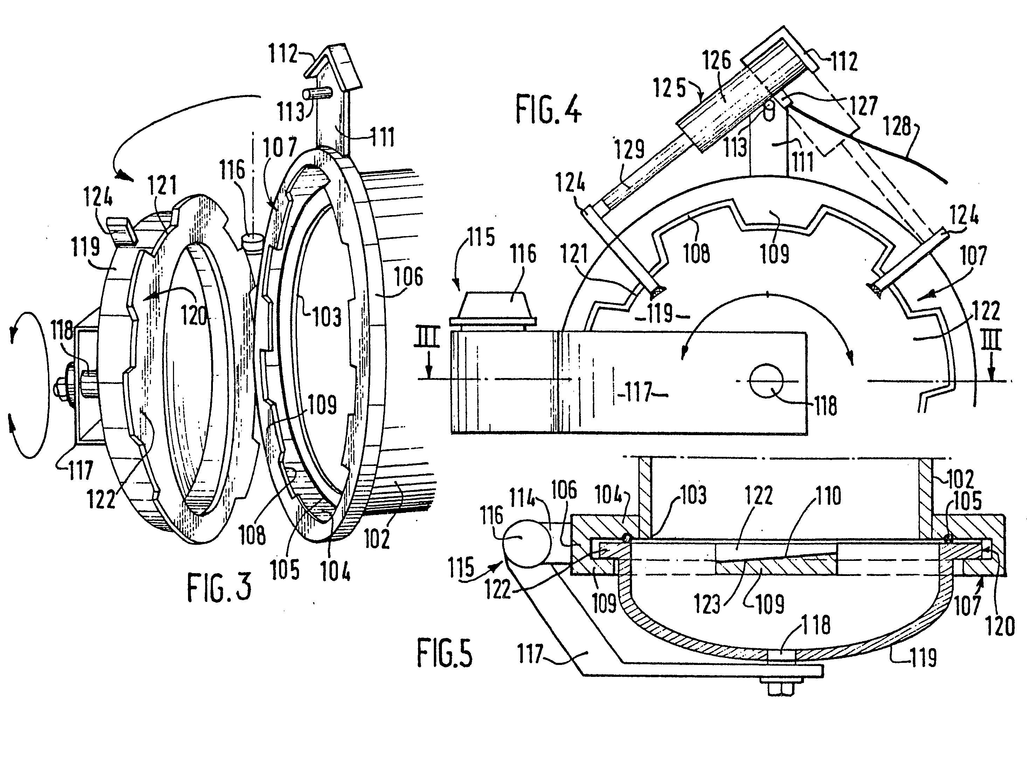

On à représenté aux fig. 3 à 5 l'extrémité avant d'une enceinte 102 d'une variante de l'appareil de refroidissement sous pression décrit ci-dessus. Cette extrémité s'ouvre sur l'extérieur par une ouverture circulaire 103 sur la périphérie de laquelle est soudée une bride annulaire 104. Dans la bride 104 est ménagée une gorge circulaire qui sert de logement à un joint d'étanchéité torique 105.

La bride 104 porte un rebord cylindrique extérieur 106 pourvu à son extrémité libre d'une collerette radiale 107 dirigée vers l'intérieur. Cette dernière définit sur sa périphérie intérieure une succession d'encoches 108 et de saillies 109 dont la face tournée vers l'intérieur de l'enceinte forme une rampe oblique 110 (fig. 5).

Sur le sommet du rebord 106 fait saillie une ferrure verticale 111 qui porte sur sa face avant d'une part une cornière d'extrémité 112 dont chaque aile est orientée à 45° vers le bas, et d'autre part un téton 113 situé sous l'angle de cette cornière et légèrement incliné vers le haut.

Le rebord 106 porte également, sur son diamètre horizontal, une aile 114 d'une charnière 115 à axe 116 vertical. L'autre aile 117 de cette charnière porte à son extrémité un tourillon horizontal 118 sur lequel la porte 119 de l'enceinte est montée librement rotative.

La porte 119 a une forme en cuvette bombée vers l'extérieur et se termine par une collerette radiale 120. Celle-ci définit sur sa périphérie extérieure une série d'encoches 121 et de saillies 122. En vue de face (fig. 4), les encoches 121 sont, à un jeu près, conjuguées des saillies 109 de l'enceinte, tandis que les saillies 122 sont, à un jeu près, conjuguées des encoches 108 de l'enceinte. De plus (fig. 5), la face opposée à l'enceinte 102 des saillies 122 forme une rampe oblique 123 de même inclinaison que la face des saillies 109.

Deux butées radiales 124 sont soudées sur la périphérie de la partie principale de la porte 119. Elles dépassent radialement par rapport au rebord 106 de l'enceinte. Chaque butée est constituée par une plaquette plane contenue dans un plan qui passe par l'axe du tourillon 118, chaque plan incliné à 45° vers le haut.

L'appareil comprend encore un vérin amovible 125 (non représenté sur la fig. 3) dont le corps 126, cylindrique, est équipé d'un raccord latéral 127 relié à un tuyau 128 d'alimentation en fluide d'actionnement. Les dimensions du corps 126 sont telles que le vérin peut être mis en place sur la ferrure 111 dans l'une ou l'autre de deux positions perpendiculaires l'une à l'autre. Dans la première position, représentée en trait plein à la fig. 4, l'axe du vérin rencontre la partie d'extrémité de la ferrure 124 correspondant au déverrouillage de la porte; dans la seconde position, représentée en trait mixte à la fig. 4, cet axe rencontre la partie d'extrémité de l'autre ferrure 124. Dans chaque position, l'extrémité du corps 126 se loge dans la cornière 112 et s'appuie sur le téton 113, et le vérin est retenu en position d'une part par la légère inclinaison vers le haut de ce téton, d'autre part par l'appui sur ce dernier du raccord 127.

Lorsqu'une charge de produit à refroidir est mise en place dans l'enceinte 102, on referme la charnière 115 en faisant pénétrer les saillies 122 à travers les encoches 108. Le vérin 125 est disposé dans la deuxième position précitée, tige de piston rentrée. Puis le vérin est mis en extension, sa tige de piston 129 attaque la butée 124 correspondante et fait tourner la porte autour du tourillon 118. Ainsi, les rampes 123 viennent s'appliquer sur les rampes fixes 110, et l'effet de came résultant presse la collerette 122 de la porte contre la bride 104, en écrasant le joint 105 (fig. 5). La porte est alors verrouillée, et la fermeture de l'enceinte est à même de supporter la surpression intérieure de cette enceinte.

Lorsque l'opération de refroidissement sous pression est terminée, on rétracte le vérin, on l'amène dans sa première position précitée, et on le met en extension; sa tige de piston 129 attaque l'autre butée 124 et fait tourner la porte dans le sens du déverrouillage jusqu'à ce que ses saillies 122 se retrouvent en regard des encoches 108. On peut alors ouvrir la porte autour de l'axe 116 de la charnière (fig. 3) et sortir la charge de produit traitée.

On remarque que grâce au long bras de levier existant entre l'extrémité des butées 124 et l'axe du tourillon 118, ces manœuvres peuvent être effectuées avec un vérin développant une force relativement modérée.

L'actionnement du vérin peut être effectué manuellement, et le vérin peut être à simple effet ou à double effet. On peut également envisager l'utilisation d'un vérin articulé entre deux positions sur la ferrure 111 et commandé automatiquement.

En variante, on peut disposer à demeure sur la ferrure 111 (ou sur tout autre support fixe approprié) deux vérins à peu près perpendiculaires l'un à l'autre et destinés à agir chacun sur l'une des deux butées 124 (ou sur une ou deux butées analogues disposées en un autre emplacement de la périphérie de la porte). Dans ce cas également, les manœuvres d'ouverture-fermeture de la porte peuvent être commandées manuellement ou automatisées.

**Revendications**

1. Procédé de refroidissement d'une charge de produits, notamment de produits alimentaires, du type dans lequel on vaporise un gaz liquéfié, notamment du $CO_2$ liquide, dans une enceinte (2; 102) contenant ladite charge et maintenue à une pression supérieure à la pression atmosphérique par un organe de décharge taré (7) à travers lequel on évacue le gaz en excès, caractérisé en ce que:

– on régule l'admission du gaz froid dans l'enceinte (2; 102) de manière à maintenir la température régnant dans cette enceinte à une valeur prédéterminée inférieure à 0°C et supérieure à la température de vaporisation du gaz liquéfié sous ladite pression; et

– on réchauffe le gaz en excès jusqu'à une température supérieure à 0°C avant de l'évacuer à travers l'organe de décharge taré (7).

2. Procédé suivant la revendication 1, caractérisé en ce qu'on refroidit plusieurs charges, chacune dans une enceinte (2; 102), on collecte et on réchauffe l'ensemble des gaz sortant des enceintes, et l'on évacue l'ensemble des gaz réchauffés par un conduit unique (5, 3, 6).

3. Procédé suivant l'une des revendications 1 et 2, caractérisé en ce qu'on établit temporairement un vide dans l'enceinte ou dans les encein-

7        0 170 580        8

tes (2; 102) avant de commencer le refroidissement.

4. Appareil pour la mise en œuvre d'un procédé suivant l'une quelconque des revendications 1
à 3, du type comprenant une enceinte (2; 102)
adaptée pour supporter une surpression, des
moyens (4, 12) pour introduire un gaz liquéfié
sous pression dans cette enceinte, et un conduit
(5, 3, 6) d'évacuation du gaz hors de l'enceinte
équipé d'un organe de décharge taré (7), caractérisé en ce qu'il comprend des moyens (28) de régulation de la témperature régnant dans l'enceinte (2; 102) commandant les moyens (4, 12) d'introduction du gaz liquéfié, et en ce que le conduit
d'évacuation (5, 3, 6) est équipé de moyens de
chauffage (25) en amont de l'organe de décharge
(7).

5. Appareil suivant la revendication 4, caractérisé en ce que les moyens de chauffage (25) sont
prévus sur un caisson de réchauffage (3) interposé dans le conduit d'évacuation (5, 3, 6).

6. Appareil suivant l'une des revendications 4
et 5, caractérisé en ce que les moyens (28) de régulation de température sont adaptés pour mesurer la température qui règne dans le conduit
d'évacuation (5, 3, 6) à la sortie de l'enceinte (2;
102).

7. Appareil suivant l'une quelconque des revendications 4 à 6, caractérisé en ce qu'il comprend plusieurs enceintes analogues (2; 102) reliées à un conduit d'évacuation unique (5, 3, 6).

8. Appareil suivant l'une quelconque des revendications 4 à 7, caractérisé en ce qu'il comprend des moyens (31) pour établir une dépression dans la ou dans les enceintes (2; 102).

9. Appareil suivant l'une quelconque des revendications 4 à 8, caractérisé en ce que l'enceinte (2; 102) est munie d'une porte (10; 119) à ouverture rapide.

10. Appareil suivant la revendication 9, caractérisé en ce que la porte (119) est montée rotative
sur un axe (118) porté sur une charnière (115) qui
assure l'articulation de la porte sur l'enceinte
(102), et en ce que l'enceinte et la porte présentent des reliefs de verrouillage du type baïonnette
(108, 109, 121, 122) à effet de came.

11. Appareil suivant la revendication 10, caractérisé en ce que sur la périphérie de la porte (119)
fait saillie au moins un relief d'actionnement
(124).

12. Appareil suivant la revendication 11, caractérisé en ce qu'il comprend deux reliefs (124)
pour exercer respectivement un couple dans chaque sens sur la porte (119).

13. Appareil selon l'une des revendications 11
et 12, caractérisé en ce qu'il comprend un support (111) pour un vérin (125) adapté pour agir
tangentiellement à la porte (119) sur ledit relief ou
sur chaque relief (124).

14. Appareil suivant la revendication 13, caractérisé en ce qu'il comprend un vérin unique (125)
et des moyens (112, 113) pour positionner sélectivement ce vérin dans l'une de deux positions correspondant respectivement au verrouillage et au
déverrouillage de la porte.

15. Appareil suivant la revendication 14, caractérisé en ce qu'il comprend deux vérins fixes
adaptés pour exercer respectivement un couple
dans chaque sens sur la porte (119).

**Patentansprüche**

1. Verfahren zur Kühlung einer Produktcharge,
insbesondere von Nahrungsmittelprodukten, des
Typs, bei dem man ein verflüssigtes Gas, insbesondere flüssiges $CO_2$, in einem Raum (2; 102)
verdampft, der die Charge enthält und durch ein
geeichtes Entnahmeorgan (7), über welches man
das überschüssige Gas abzieht, auf einem Druck
über dem Atmosphärendruck gehalten wird, dadurch gekennzeichnet, dass man
– die Zufuhr von kaltem Gas zu dem Raum (2;
102) derart steuert, dass die in diesem Raum
herrschende Temperatur auf einem vorbestimmten Wert unterhalb 0°C und oberhalb der Verdampfungstemperatur des verflüssigten Gases
unter dem besagten Druck gehalten wird, und
– das überschüssige Gas bis zu einer Temperatur
oberhalb 0°C erwärmt, bevor man es über das geeichte Entnahmeorgan (7) abzieht.

2. Verfahren nach Anspruch 1, dadurch gekennzeichnet, dass man mehrere Chargen, jede
in einem Raum (2; 102), kühlt, die Gesamtheit der
die Räume verlassenden Gase sammelt und wieder erwärmt und die Gesamtheit der wieder erwärmten Gase durch eine einzige Leitung (5, 3, 6)
abzieht.

3. Verfahren nach einem der Ansprüche 1 und
2, dadurch gekennzeichnet, dass man vorübergehend ein Vakuum in dem Raum oder in den Räumen (2; 102) vorsieht, bevor man mit der Kühlung
beginnt.

4. Vorrichtung zur Durchführung eines Verfahrens nach einem der Ansprüche 1 bis 3 mit einem
Raum (2; 102), der zum Aushalten eines Überdruckes ausgebildet ist, Einrichtungen (4, 12) zur
Einführung eines verflüssigten Gases unter
Druck in diesen Raum und einer mit einem geeichten Entnahmeorgan (7) ausgestatteten Leitung (5, 3, 6) zum Abziehen von Gas aus dem
Raum, dadurch gekennzeichnet, dass sie Einrichtungen (28) zur Regulierung der in dem Raum (2;
102) herrschenden Temperatur aufweist, die die
Einrichtungen (4, 12) zur Einführung des verflüssigten Gases steuern, und dass die Abzugsleitung (5, 3, 6) mit Erwärmungseinrichtungen (25)
aufstromwärts von dem Entnahmeorgan (7) ausgestattet ist.

5. Vorrichtung nach Anspruch 4, dadurch gekennzeichnet, dass die Erwärmungseinrichtungen (25) auf einem Wiedererwärmungsbehälter
(3) vorgesehen sind, der in der Abzugsleitung (5,
3, 6) zwischengeschaltet ist.

6. Vorrichtung nach einem der Ansprüche 4
und 5, dadurch gekennzeichnet, dass die Einrichtungen (28) zur Regulierung der Temperatur so
ausgebildet sind, dass sie die Temperatur messen, die in der Abzugsleitung (5, 3, 6) am Ausgang
des Raumes (2; 102) herrscht.

5

7. Vorrichtung nach einem der Ansprüche 4 bis 6, dadurch gekennzeichnet, dass sie mehrere entsprechende Räume (2; 102) aufweist, die mit einer einzigen Abzugsleitung (5, 3, 6) verbunden sind.

8. Vorrichtung nach einem der Ansprüche 4 bis 7, dadurch gekennzeichnet, dass sie Einrichtungen (31) zur Erzeugung eines Unterdruckes in dem Raum oder in den Räumen (2; 102) aufweist.

9. Vorrichtung nach einem der Ansprüche 4 bis 8, dadurch gekennzeichnet, dass der Raum (2; 102) mit einem Tor (10; 119) für schnelles Öffnen versehen ist.

10. Vorrichtung nach Anspruch 9, dadurch gekennzeichnet, dass das Tor (119) drehbar auf einer Achse (118) befestigt ist, die von einem Drehgelenk (115) getragen wird, welches die Schwenkbewegung des Tores auf dem Raum (102) gewährleistet, und dass der Raum und das Tor Verriegelungsprofile vom Bajonettyp (108, 109, 121, 122) mit Nockenwirkung haben.

11. Vorrichtung nach Anspruch 10, dadurch gekennzeichnet, dass auf dem Umfang des Tores (119) wenigstens ein Betätigungsprofil (124) vorspringt.

12. Vorrichtung nach Anspruch 11, dadurch gekennzeichnet, dass sie zwei Profile (124) aufweist, um jeweils ein Drehmoment in jeder Richtung auf das Tor (119) auszuüben.

13. Vorrichtung nach einem der Ansprüche 11 und 12, dadurch gekennzeichnet, dass sie einen Träger (111) für einen Stellantrieb (125) aufweist, der so ausgebildet ist, dass er tangential an dem Tor (119) auf das Profil oder auf jedes Profil (124) einwirkt.

14. Vorrichtung nach Anspruch 13, dadurch gekennzeichnet, dass sie einen einzigen Stellantrieb (125) und Einrichtungen (112, 113) zur selektiven Positionierung dieses Stellantriebes in einer von zwei Positionen jeweils entsprechend einer Verriegelung und Entriegelung des Tores aufweist.

15. Vorrichtung nach Anspruch 14, dadurch gekennzeichnet, dass sie zwei feststehende Stellantriebe aufweist, die so ausgebildet sind, dass sie jeweils ein Drehmoment in jeder Richtung auf das Tor (119) ausüben.

## Claims

1. Process for cooling a charge of products, especially foodstuff products, of the type in which a liquefied gas, especially liquid $CO_2$, is vaporized within a receptacle (2; 102) containing said charge and maintained at a pressure above the atmospheric pressure by an preset discharge organ (7) through which the excess gas is withdrawn, characterized in that
– the admission of cold gas in the receptacle (2; 102) is controlled to maintain the temperature prevailing in this receptacle at a predetermined value below 0°C and above the temperature of vaporization of the liquefied gas at the said pressure, and

– the excessive gas ist heated to a temperature above 0°C before withdrawing it trough the preset discharge organ.

2. Process according to claim 1, characterized in that a plurality of charges are cooled, each in a receptacle (2; 102), the totality of the gases leaving the receptacles is collected and heated, and the totality of the preheated gases is withdrawn via a single contuit (5, 3, 6).

3. Process according to one of the claims 1 and 2, characterized in that temporarily a vacuum is provided in the receptacle or in the receptacles (2, 102) before cooling begins.

4. Apparatus for carrying out a process according to one of the claims 1 to 3, of the type comprising a receptacle (2, 102) adapted to withstand a superpressure, means (4, 12) for introducing a liquefied gas under pressure in this receptacle, and a conduit (5, 3, 6) for withdrawal of gas from the receptacle equipped with a preset discharge organ (7), characterized in that it comprises means (28) for regulation of the temperature prevailing in the receptacle (2, 102) controlling the means (4, 12) for introducing liquefied gas, and that the withdrawal conduit (5, 3, 6) is equipped with heating means (25) upstream the discharge organ (7).

5. Apparatus according to claim 4, characterized in that the heating means (25) are provided on a reheating tank (3) interposed in the withdrawal conduit (5, 3, 6).

6. Apparatus according to one of the claims 4 and 5, characterized in that the means (28) for regulating the temperature are adapted to measure a temperature which prevails in the withdrawal conduit (5, 3, 6) at the exit of the receptacle (2, 102).

7. Apparatus according to one of the claims 4 to 6, characterized in that it comprises a plurality of analogous receptacles (2, 102) connected with a single withdrawal conduit (5, 3, 6).

8. Apparatus according to one of the claims 4 to 7, characterized in that it comprises means (31) for providing underpressure in the receptacle or receptacles (2, 102).

9. Apparatus according to one of the claims 4 to 8, characterized in that the receptacle (2, 102) is provided with a fast-opening door (10, 119).

10. Apparatus according to claim 9, characterized in that the door (119) is mounted rotatively on an axis (118) carried on a hinge (115) which ensures the articulation of the door on the receptacle (102) and that the receptacle and the door present locking reliefs of the bayonet type (108, 109, 121, 122) with cam effect.

11. Apparatus according to claim 10, characterized in that on the periphery of the door (119) at least one actuation relief (124) projects.

12. Apparatus according to claim 11, characterized in that it comprise two reliefs (124) for exercising respectively a torque in each direction on the door (119).

13. Apparatus according to one of the claims 11 and 12, characterized in that it comprises a support (111) for an actuating cylinder (125) adapted for acting tangentially of the door (119) on said relief or each relief (124).

14. Apparatus according to claim 13, characterized in that it comprises a single actuating cylinder (125) and means (112, 113) to position selectively this actuating cylinder in one of two positions corresponding to locking and unlocking, respectively, of the door.

15. Apparatus according to claim 14, characterized in that it comprises two fixed actuating cylinders adapted to exercise respectively a torque in each direction on the door (119).

FIG.1

FIG.2

FIG.3

FIG.4

FIG.5

0 170 580

13